# EUROPÄISCHE PATENTSCHRIFT

(11) **EP 1 524 909 B1**
(45) Veröffentlichungstag und Bekanntmachung des Hinweises auf die Patenterteilung: **24.12.2008**
(21) Anmeldenummer: 03766299.6
(22) Anmeldetag: 25.07.2003
(51) Int. Cl.: A22C 13/00, C08J 5/18

(54) **LASERMARKIERBARE FLEXIBLE TRÄGEREINHEIT**
LASER MARKABLE CARRIER UNIT
UNITE DE SUPPORT SOUPLE MARQUABLE AU LASER

(30) Priorität: 31.07.2002 DE 10235018
(43) Veröffentlichungstag der Anmeldung: 27.04.2005
(73) Patentinhaber: Merck Patent GmbH, 64293 Darmstadt (DE)
(72) Erfinder: RAUPACH, Roland, 64354 Reinheim (DE); EYMANN, Rolf, 64354 Reinheim (DE)
(86) Internationale Anmeldenummer: PCT/EP2003/008224
(87) Internationale Veröffentlichungsnummer: WO 2004/012515

(56) Entgegenhaltungen:
- EP-A- 0 190 997
- EP-A- 0 941 663
- WO-A-03/018700
- DE-A- 19 630 478
- DE-A- 19 905 415
- DE-C- 19 642 040
- US-A- 5 422 383
- US-A- 5 843 547

## Beschreibung

Die vorliegende Erfindung betrifft die Laserbeschriftung einer flexiblen inneren Trägerschicht einer mehrschichtigen Trägereinheit, die sich dadurch auszeichnet, dass die Laserbeschriftung der inneren Trägerschicht durch eine oder mehrere voneinander getrennte oder trennbare flexible äußerte laserinaktive Trägerschichten hindurch erfolgt.

Wachsende Bedeutung gewinnt die berührungslose, sehr schnelle und flexible Markierung mit Lasern bei Verpackungen aus Kunststoff. So müssen häufig Vertallsdaten, Barcodes, Firmenlogos, Seriennummern, etc., auf Kunststoffen oder Kunststofffolien aufgebracht werden. So werden in der DE 196 30 478 oder der DE 198 10 952 ein- oder mehrschichtige Nahrungsmittelhüllen auf der Basis von natürlichen und/oder synthetischen Polymeren durch den Zusatz eines lasersensitiven Pigments durch Laserstrahlen markierbar gemacht.

Das in der DE 198 10 952 beschriebene Verfahren ist allerdings nicht für mehrschichtige Trägereinheiten, wie z.B. Doppelsäcke, geeignet. Bei der Verpackung bestehen Kunststoffdoppelsäcke in der Regel aus zwei Säcken, die ineinander gestellt werden. Die Beschriftung des inneren Sackes erfolgt von Hand oder mit einem automatischen Etikettierer, der ein vorgedrucktes Etikett auf den Innensack aufbringt. Anschließend wird der erste Sack nach der Befüllung in den zweiten Sack hineingestellt. Beim Einsatz dieses Doppelsackes beim Kunden kann der gegebenenfalls verschmutzte äußere Sack entfernt und der saubere innere Sack in den Produktionsbereich zur Entleerung gegeben werden. Die zuvor erfolgte Etikettierung des inneren Kunststoffsackes dient dabei der Identifikation des abgefüllten Produkts und den Sicherheitsanforderungen bei abgefüllten Gefahrstoffen, auch nachdem der Außensack mit dem Produktetikett entfernt ist.

Von Nachteil ist dabei, dass die händische Etikettierung des Innensackes sehr hohe Personalkosten verursacht und daher nur bei sehr kleinen Produktionschargen wirtschaftlich vertretbar ist. Neben den beschriebenen Doppelsäcken bestehend aus zwei manuell ineinander vorkonfektionierten Säcken, die ineinander gestellt werden, gibt es im Markt einen doppelten Kunststoffsack, der eine besondere Herstell- und Verschlusstechnik aufweist, die derart ist, dass falls der äußere Sack nach dem Öffnen entfernt wird, ein sauberer, aber diesmal noch verschlossener Innensack zur Verfügung steht. Hierbei ist das Problem, dass nach dem Entfernen des äußeren Sacks, welcher auch zumeist das Produktetikett trägt, der Innensack keine Beschriftung aufweist, die dem Anwender die Identifizierung des Inhalts ermöglicht.

Einige erforderliche Produktangaben, wie z. B. Chargennummer, Artikelnummer, Abfülldatum, etc., sind erst kurz vor der Abfüllung bekannt und werden in der Regel auf dem Außenetikett oder auf der Außenseite des Sackes mittels einer geeigneten Kennzeichnungsmethode angebracht.

Der innere und der äußere Sack können bei einem Doppelsack am oberen Rand punktuell oder umlaufend geschlossen, miteinander verklebt sein. Diese Verklebung ermöglicht ein leichtes Öffnen für den Befüllvorgang und verhindert das Eindringen von Füllstoff zwischen den beiden Sacklagen.

Nachteilig ist aber, dass diese Verklebung die Beschriftung des inneren Sacks vor und nach der Befüllung verhindert. Eine Innensackmarkierung mit den erforderlichen Angaben konnte bisher nicht, weder automatisiert noch manuell, mit ausreichender Wirtschaftlichkeit realisiert werden.

Aufgabe der vorliegenden Erfindung ist es daher ein Markierverfahren für mehrschichtige flexible Trägereinheiten zu finden, das es ermöglicht, durch die äußeren Schichten die innere Schicht zu markieren, ohne Markierung bzw. Beschädigung der äußeren Schichten.

Überraschenderweise wurde nun gefunden, dass wenn man bei mehrschichtigen flexiblen Trägereinheiten aus Kunststoffen, die innere Schicht mit einem lasersensitiven Pigment und/oder Additiv dotiert oder auf die innere Schicht eine lasermarkierbare Schicht aufbringt, unter Einwirkung von Laserlicht eine Markierung mit hohem Kontrast bei dem Mehrschichtsystem nur auf der inneren Schicht erfolgt.

Gegenstand der Erfindung sind daher lasermarkierbare flexible Trägereinheiten aus Kunststoffen gemäß Auspruch 1.

Bei der Bestrahlung der Trägereinheit dringt das Laserlicht durch die äußeren Schicht ohne Markierungen und/oder Beschädigungen zu hinterlassen hindurch und markiert bzw. beschriftet die innere Trägerschicht. Mit dem erfindungsgemäßen Verfahren ist es möglich bei Doppelsäcken durch den äußeren Sack den inneren Sack zu markieren und die erforderlichen Informationen, wie z.B. Produktinhalt, Chargennummer, etc., aufzubringen.

Durch die Verwendung eines laserabsorbierenden Pigments oder Additivs in der inneren Kunststoffschicht findet bei der Absorption des Laserstrahls eine Karbonisierung oder ein Aufschäumen in der zu markierenden Schicht statt, wodurch eine dauerhafte und kontrastreiche dunkle Markierung erzielt wird.

Die für die Markierung geeigneten laserlichtabsorbierenden Substanzen basieren vorzugsweise auf Anthracen, Pentaerythrit, Kupferphosphaten, Kupferhydroxidphosphaten, z.B. Libethenit, Molybdändisulfid, Antimon(III)oxid und Wismuthoxychlorid, plättchenförmigen, insbesondere transparenten oder semi-transparenten, Substraten aus z. B. Schichtsilikaten, wie etwa synthetischer oder natürlicher Glimmer, Talkum, Kaolin, Glasplättchen, SiO₂-Plättchen oder synthetischen trägerfreien Plättchen. Weiterhin kommen auch plättchenförmige Metalloxide wie z. B. plättchenförmiges Eisenoxid, Aluminiumoxid, Titandioxid, Siliziumdioxid, LCP's (Liquid Crystal Polymers), holographische Pigmente, leitfähige Pigmente oder beschichtete Graphitplättchen in Betracht.

Als plättchenförmige Pigmente können auch Metallplättchen eingesetzt werden, die unbeschichtet oder auch mit einer oder mehreren Metalloxidschichten bedeckt sein können; bevorzugt sind z. B. Al-, Cr-, Fe-, Au-, Ag- und Stahlplättchen. Sollten korrosionsanfällige Metallplättchen wie z. B. Al-, Fe- oder Stahlplättchen unbeschichtet eingesetzt werden, werden sie vorzugsweise mit einer schützenden Polymerschicht überzogen.

Besonders bevorzugte Substanzen sind unbeschichtete oder mit ein oder mehreren Metalloxiden beschichtete Glimmerschuppen. Als Metalloxide werden dabei sowohl farblose hochbrechende Metalloxide, wie insbesondere Titandioxid, Antimon(III)oxid, Zinkoxid, Zinnoxid und/oder Zirkoniumdioxid verwendet als auch farbige Metalloxide wie z. B. Chromoxid, Nickeloxid, Kupferoxid, Kobaltoxid und insbesondere Eisenoxid (Fe₂O₃, Fe₃O₄). Insbesondere bevorzugt wird als Absorbermaterial Antimon(III)oxid allein oder in Kombination mit Zinnoxid verwendet.

Pigmente auf der Basis transparenter oder semitransparenter plättchenförmiger Substrate werden z. B. beschrieben in den deutschen Patenten und Patentanmeldungen 14 67 468,19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017, 38 42 330, 44 41 223, 196 18 569, 196 38 708, 197 07 806 und 198 03 550.

Diese Substrate sind bekannt und größtenteils kommerziell erhältlich, z. B. unter der Marke Iriodin^{®} Laserflair der Fa. Merck KGaA, und/oder können nach dem Fachmann bekannten Standardverfahren hergestellt werden.

Beschichtete SiO₂-Plättchen sind z. B. bekannt aus der WO 93/08237 (nasschemische Beschichtung) und der DE-OS 196 14 637 (CVD-Verfahren).

Mehrschichtpigmente basierend auf Schichtsilikaten sind beispielsweise aus den deutschen Offenlegungsschriften DE 196 18 569, DE 196 38 708, DE 197 07 806 und DE 198 03 550 bekannt. Besonders geeignet sind Mehrschichtpigmente, die folgenden Aufbau besitzen:
Glimmer + TiO₂ + SiO₂ + TiO₂
Glimmer + TiO₂ + SiO₂ + TiO₂/Fe₂O₃
Glimmer + TiO₂ + SiO₂ + (Sn, Sb)O₂
Glimmer + SiO₂ + (Sn, Sb)₂O
Glimmer + (Sn, Sb)₂O
SiO₂-Plättchen + TiO₂ + SiO₂ + TiO₂
SiO₂-Plättchen + TiO₂ + SiO₂ + (Sn, Sb)O₂
Glas-Plättchen + TiO₂ + SiO₂ + (Sn, Sb)O₂

Besonders bevorzugte laserlichtabsorbierende Substanzen sind natürlicher oder synthetischer Glimmer, mit TiO₂ beschichtete Glimmerplättchen, leitfähige Pigmente, wie z.B. mit (Sn,Sb)O₂ beschichtete plättchenförmige Substrate, Antimon und Antimon(III)oxid, Anthracen, Pentaerythrit, Kupferhydroxidphosphate, Molybdändisulfid, undotiertes oder mit Zinnoxid dotiertes Antimon(III)oxid und Wismuthoxychlorid sowie Gemische der genannten Substanzen.

Durch den Zusatz der lasersensitiven Pigmente und/oder Additive in Konzentrationen von 0,05 bis 10 Gew.%, vorzugsweise 0,05 bis 6 Gew.% und insbesondere von 0,1 bis 3 Gew.% bezogen auf die innere Trägerschicht bzw. bezogen auf die laserdotierte Schicht auf der Oberfläche der inneren Trägerschicht (z.B. das Etikett), wird bei der Lasermarkierung ein hoher Kontrast und eine hohe Kantenschärfe erzielt.

Wird ein Gemisch von mehreren unterschiedlichen lasersensitiven Pigmenten und/oder Additiven eingesetzt, so sollte die Gesamtkonzentration 10 Gew.% nicht übersteigen.

Die Konzentration des lasersensitiven Pigments und/oder Additivs ist abhängig vom eingesetzten Kunststoffsystem. Der geringe Anteil an Pigment bzw. Additiv verändert das Kunststoffsystem nicht bzw. nur unwesentlich und beeinflusst weiterhin auch nicht dessen Verarbeitbarkeit.

Die inneren und die äußeren Schichten der Trägereinheit können aus verschiedenen Kunststoffen oder aus den gleichen Kunststoffen bestehen. Geeignete Kunststoffe sind insbesondere Duroplaste und Thermoplaste.

Die inneren und äußeren Schichten der lasermarkierbaren Trägereinheiten können aus den bekannten Thermoplasten sowie Duroplasten, wie sie z. B. im Ullmann, Bd. 15, S. 457 ff., Verlag VCH beschrieben werden, bestehen. Besonders geeignet sind Polyethylen, Polypropylen, Polyamide, Polyester, Polyesterester, Polyetherester, Polyphenylenether, Polyacetale, Polybutylenterephthalat, Polymethylmethacrylat, Polyvinylacetal, Polystyrol, Acrylnitril-Butadien-Styrol (ABS), Acrylnitril-Styrol-Acrylester (ASA), Vinylacetat, Polycarbonat, Polyethersulfone und Polyetherketone sowie deren Copolymeren und/oder Mischung.

Vorzugsweise bestehen die inneren Trägerschichten der Trägereinheit aus Polyethylen oder Polypropylen und gegebenenfalls Copolymeren mit z.B. Vinylacetat.

Die inneren und/oder äußeren Schichten können transparent oder mit Farbmitteln in allen oder gegebenenfalls nur in einer der Schichten eingefärbt sein. Die Farbmittel erlauben farbliche Variationen jeder Art und und beeinflussen nicht das Markierergebnis. Geeignete Farbmittel sind insbesondere farbige Metalioxidpigmente, wie z.B. TiO₂, sowie organische Pigmente und Farbstoffe. Üblicherweise werden die Farbmittel in Mengen von 0 bis 6 Gew.% bezogen auf die Trägerschicht eingesetzt.

Die Markierung der inneren Trägerschicht wird möglich, indem die lasersensitiven Pigmenten und/oder Additive in den Kunststoff eingearbeitet werden oder auf die Oberfläche der innenliegenden Schicht eine markierbare Beschichtung aufgebracht wird. Diese markierbare Schicht, die lasersensitive Pigmenten und/oder Additive enthält, wird durch übliche Techniken, wie z.B. mittels Coextrusion, Lackierung, Beschichtung oder Bedruckung, auf die Innenschicht aufgebracht. Vorzugsweise wird die lasermarkierbare Schicht auf die Innenfolie durch Coextrusion einer mit dem lasermarkierbaren Pigment gefüllten Coextrusionsmasse aufgebracht. Ferner kann ein Etikett, dass lasersensitive Pigmente enthält, auf die Innenfolie aufgeklebt werden.

Bei den Trägereinheiten handelt es sich um Packmittel- oder Nahrungsmittelhüllen bzw. -folien, mit mindestens zwei, ferner drei oder vier, Trägerschichten. Bei den Trägerschichten handelt es sich vorzugsweise Folien und Verbundfolien.

Bei den Folien kann es sich um monolithische oder auch Mehrschichtextrusionsfolien handeln, beispielsweise hergestellt nach dem Blasfolien- oder Chill-Roll-Verfahren. Die Trägerschichten, wie z.B. Säcke und Folien, können zusätzlich mit Klebeschichten und/oder Lackschichten versehen sein.

Das erfindungsgemäße Verfahren ist insbesondere geeignet zur Markierung von Innensäcken bei Doppelsäcken, zwei oder mehr übereinanderliegenden Folien, wobei die einzelnen Schichten nicht flächig miteinander verbunden sind.

Die Markierung der flexiblen Trägereinheit ist leicht zu handhaben. Die Markierung erfolgt in der Kunststoffmatrix, indem das lasersensitive Pigment und/oder Additiv mit dem Kunststoffgranulat gemischt und unter Wärmeeinwirkung verformt wird. Dem Kunststoffgranulat können bei der Einarbeitung der lasersensitiven Substanz gegebenenfalls Haftmittel, organische polymerverträgliche Lösemittel, Stabilisatoren und/oder unter den Arbeitsbedingungen temperaturstabile Tenside zugesetzt werden. Die Herstellung der so dotierten Kunststoffgranulate erfolgt in der Regel so, dass in einem geeigneten Mischer das Kunststoffgranulat vorgelegt, mit üblichen Zusätzen benetzt und danach die lasersensitive Substanz zugesetzt und untergemischt wird. Die Farbgebung des Kunststoffs erfolgt in der Regel über ein Farbkonzentrat (Masterbatch) oder Compound. Die so erhaltene Mischung kann dann direkt in einem Extruder oder einer Spritzgußmaschine verarbeitet werden. Auf diese Weise wird das lasersensitive Pigment im Kunststoff homogen verteilt.

Bei der Applikation der lasersensitiven Schicht auf die Oberfläche der inneren Trägerschicht kann die lasersensitive Substanz direkt auf den zu beschriftenden Kunststoff auf- und/oder eingetragen werden. Die Absorber-Komponente wird auf die Oberfläche des zu markierenden Systems durch übliche Techniken, wie coextrudieren, lackieren, pinseln, bürsten, drucken, sprühen, rakeln, kleben, aufgetragen. Die Schichtdicke beträgt in der Regel 0,1 bis 10000 nm, vorzugsweise 10 bis 5000 nm, insbesondere 50 bis 3000 nm. Weiterhin kann auch eine Kunststofffolie dotiert mit einem lasersensitiven Pigment auf die innere Trägerschicht aufgeklebt werden. Dieses Verfahren wird insbesondere bei der Laserbeschriftung von Etiketten eingesetzt.

Die Beschriftung mit dem Laser erfolgt derart, dass der Probenkörper in den Strahlengang eines gepulsten Lasers, vorzugsweise eines CO₂- oder Nd : YAG-Lasers gebracht wird. Ferner ist eine Beschriftung mit einem Excimer-Laser, z. B. über eine Maskentechnik, möglich. Jedoch sind auch mit anderen herkömmlichen Lasertypen, die eine Wellenlänge in einem Bereich hoher Absorption der verwendeten laserlichtabsorbierenden Substanz aufweisen, die gewünschten Ergebnisse zu erzielen. Die erhaltene Markierung wird durch die Bestrahlungszeit (bzw. Pulszahl bei Pulslasern) und Bestrahlungsleistung des Lasers sowie des verwendeten Kunststoffsystems bzw. Lacksystems bestimmt. Die Leistung der verwendeten Laser hängt von der jeweiligen Anwendung ab und kann im Einzelfall vom Fachmann ohne weiteres ermittelt werden.

Der verwendete Laser hat im allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und Nd : YAG-Laser (1064 bzw. 532 nm) oder gepulste UV-Laser erwähnt. Die Excimerlaser weisen folgende Wellenlängen auf: F₂-Excimerlaser (157 nm), ArF-Excimerlaser (193 nm), KrCl-Excimerlaser (222 nm), KrF-Excimerlaser (248 nm), XeCl-Excimerlaser (308 nm), XeF-Excimerlaser (351 nm), frequenzvervielfachte Nd : YAG-Laser mit Wellenlängen von 355 nm (frequenzverdreifacht) oder 265 nm (frequenzvervierfacht). Besonders bevorzugt werden Nd : YAG-Laser (1064 bzw. 532 nm) und CO₂-Laser eingesetzt. Die Energiedichten der eingesetzten Laser liegen im allgemeinen im Bereich von 0,3 mJ/cm² bis 50 J/cm², vorzugsweise 0,3 mJ/cm² bis 10 J/cm².

Bei der Verwendung von gepulsten Lasern liegt die Pulsfrequenz im allgemeinen im Bereich von 1 bis 30 kHz. Entsprechende Laser, die im erfindungsgemäßen Verfahren eingesetzt werden können, sind kommerziell erhältlich.

Die Verwendung der flexiblen lasermarkierbaren Trägereinheit kann auf allen Gebieten erfolgen, wo bisher übliche Druckverfahren oder Etiketten zur Beschriftung von Packmitteln eingesetzt werden, z.B. bei der Verpackung im Lebensmittelbereich, bei Pharmaprodukten oder im Spielzeugbereich. Die Markierungen auf den Verpackungen zeichnen sich dadurch aus, dass sie wisch- und kratzfest, stabil bei nachträglichen Sterilisationsprozessen, und hygienisch rein beim Markierungsprozess aufbringbar sind.

Die folgenden Beispiele sollen die Erfindung erläutern ohne sie jedoch zu begrenzen. Die angegebenen Prozentangaben sind Gewichtsprozente.

### Beispiele:

### Beispiel 1

Eine innere Verbund-Folie aus Polyethylen, Schichtdicke 80 µm, wird coextrudiert. In die äußere weiße Schicht der Innenfolie werden 2,0 Gew. % Iriodin^{®} LS 825 (lasersensitives leitfähiges Pigment der Firma Merck KGaA) eingebracht, während die innere produktberührende Schicht der Innenfolie keine Pigmente oder Farbanteile enthält.

Die Zugabe des lasersensitiven Pigments erfolgt über ein Masterbatch um eine homogene Verteilung zu erzielen. Die äußere Folie besteht aus Polyethylen, Schichtdicke 140 µm. Die Folie ist transparent und wird ohne lasersensitives Pigment gefertigt.

Die beiden Folien werden zu Säcken verarbeitet, wobei der innere Sack die laserpigmentierte Außenschicht aufweist, während der äußere Sack transparent ist und mit dem inneren Sack am oberen Rand verklebt wird. Diese Verklebung verhindert eine Etikettierung des inneren Sacks kurz vor der Befüllung, da auf den inneren Sack nicht zugegriffen werden kann. Es ist aber möglich kurz vor der Befüllung des Sackes eine beliebig variable und dauerhafte Beschriftung, auf der äußeren pigmentierten Trägerschicht der Innenfolie, mit einem Nd : YAG-Laser, bei einer Wellenlänge von 1064 nm, durchzuführen. Die erzielte Beschriftung ist kontrastreich und gut lesbar.

## Patentansprüche

1. Lasermarkierbare flexible Trägereinheit aus Kunststoff in Form eines Doppelsacks, **dadurch gekennzeichnet, dass** sie aus einer inneren flexiblen Trägerschicht, d.h. innerer Sack, und einer oder mehreren voneinander trennbaren oder getrennten flexiblen äuβeren laserinaktiven Trägerschichten, d.h. äuβerer Sack, besteht, wobei die einzelnen Säcke nicht flächig miteinander verbunden sind und der innere Sack ein oder mehrere lasersensitive Pigmente oder Additive enthält.

2. Lasermarkierbare flexible Trägereinheit nach Anspruch 1, **dadurch gekennzeichnet, dass** die innere Trägerschicht als lasersensitives Pigment oder Additiv Anthracen, Pentaerythrit, Kupferphosphate, Kupferhydroxidphosphate, Molybdändisulfid, Antimon(III)oxid , Wismuthoxychlorid, Schichtsilikate, Glasplättchen, SiO₂-Plättchen, Metalloxidplättchen, leitfähige Pigmente, holographische Pigmente, Perlglanzpigmente, mit Antimon dotiertes Zinnoxid, beschichtete Graphitplättchen oder deren Gemische enthält.

3. Lasermarkierbare flexible Trägereinheit nach Anspruch 2, **dadurch gekennzeichnet, dass** das Schichtsilikat natürlicher oder synthetischer Glimmer, Kaolin oder Talkum ist.

4. Lasermarkierbare flexible Trägereinheit nach Anspruch 2, **dadurch gekennzeichnet, dass** Perlglanzpigment auf Glimmerplättchen, SiO₂-, Al₂O₃-, Fe₂O₃- oder Glasplättchen basiert.

5. Lasermarkierbare flexible Trägereinheit nach Anspruch 2, **dadurch gekennzeichnet, dass** Perlglanzpigment ein mit TiO₂ beschichtetes Glimmerpigment ist.

6. Lasermarkierbare flexible Trägereinheit nach Anspruch 3, **dadurch gekennzeichnet, dass** das leitfähige Pigment ein mit (Sn,Sb)O₂ beschichtetes plättchenförmiges Substrat ist.

7. Lasermarkierbare flexible Trägereinheit nach einem der Ansprüche 1 bis 6, **dadurch gekennzeichnet, dass** der Anteil an lasersensitiven Pigment und/oder Additiv in der inneren Trägerschicht 0,05 bis 10 Gew.% bezogen auf die Trägerschicht bzw. bezogen auf die laserdotierte Oberflächenschicht der Trägerschicht beträgt.

8. Lasermarkierbare flexible Trägereinheit nach Anspruch 1-7, **dadurch gekennzeichnet, dass** der Kunststoff ein Thermoplast oder ein Duroplast ist.

9. Lasermarkierbare flexible Trägereinheit nach Anspruch 8, **dadurch gekennzeichnet, dass** der Kunststoff aus Polyethylen, Polypropylen, Polyamid, Polyester, Polyesterester, Polyetherester, Polyphenylenether, Polyacetal, Polybutylenterephthalat, Polymethylmethacrylat, Polyvinylacetal, Polystyrol, Acrylnitril-Butadien-Styrol (ABS), Acrylnitril-Styrol-Acrylester (ASA), Vinylacetat, Polycarbonat, Polyethersulfone und Polyetherketone sowie deren Copolymeren und/oder Mischung besteht.

10. Verfahren zur Beschriftung und Markierung einer flexiblen Trägereinheit in Form eines Doppelsacks nach einem oder mehreren der Ansprüche 1 bis 9 bestehend aus einem inneren Sack d.h. innere lasermarkierbare flexible Trägerschicht, und einem äußeren Sack, d.h. flexible äußere laserinaktive Trägerschicht, **dadurch gekennzeichnet, dass** ein lasersensitives Pigment und/oder Additiv in den inneren Sack eingearbeitet oder auf die Oberfläche aufgebracht wird und die Laserbeschriftung des inneren Sacks durch den äußeren Sack hindurch erfolgt, wobei nur der innere Sack markiert wird.

11. Verfahren zur Beschriftung und Markierung einer lasermarkierbaren flexiblen Trägereinheit nach Anspruch 16, **dadurch gekennzeichnet, dass** man einen CO₂- oder Nd : YAG-Laser verwendet.

12. Lasermarkierbare flexible Trägereinheit in Form eines Doppelsacks nach einem oder mehreren der Ansprüche 1 bis 9 beschriftet und markiert nach dem Verfahren von Anspruch 10.

## Claims

1. Laser-markable flexible support unit made from plastic in the form of a double sack, **characterised in that** it consists of an inner flexible support layer, i.e. inner sack, and one or more flexible outer laser-inactive support layers which can be or are separated from one another, i.e. outer sack, where the individual sacks are not connected to one another over a wide area and the inner sack comprises one or more laser-sensitive pigments or additives.

2. Laser-markable flexible support unit according to Claim 1, **characterised in that** the inner support layer comprises, as laser-sensitive pigment or additive, anthracene, pentaerythritol, copper phosphates, copper hydroxide phosphates, molybdenum disulfide, antimony(III) oxide, bismuth oxychloride, phyllosilicates, glass flakes, SiO₂ flakes, metal-oxide flakes, conductive pigments, holographic pigments, pearlescent pigments, antimony-doped tin oxide, coated graphite flakes or mixtures thereof.

3. Laser-markable flexible support unit according to Claim 2, **characterised in that** the phyllosilicate is natural or synthetic mica, kaolin or talc.

4. Laser-markable flexible support unit according to Claim 2, **characterised in that** the pearlescent pigment is based on mica flakes, SiO₂ flakes, Al₂O₃ flakes, Fe₂O₃ flakes or glass flakes.

5. Laser-markable flexible support unit according to Claim 2, **characterised in that** the pearlescent pigment is a TiO₂-coated mica pigment.

6. Laser-markable flexible support unit according to Claim 3, **characterised in that** the conductive pigment is an (Sn,Sb)O₂-coated flake-form substrate.

7. Laser-markable flexible support unit according to one of Claims 1 to 6, **characterised in that** the proportion of laser-sensitive pigment and/or additive in the inner support layer is 0.05 to 10% by weight, based on the support layer or based on the laser-doped surface layer of the support layer.

8. Laser-markable flexible support unit according to Claims 1-7, **characterised in that** the plastic is a thermoplastic or a thermoset.

9. Laser-markable flexible support unit according to Claim 8, **characterised in that** the plastic consists of polyethylene, polypropylene, polyamide, polyester, polyester-ester, polyether-ester, polyphenylene ether, polyacetal, polybutylene terephthalate, polymethyl methacrylate, polyvinyl acetal, polystyrene, acrylonitrile-butadiene-styrene (ABS), acrylonitrile-styrene-acrylate (ASA), vinyl acetate, polycarbonate, polyether sulfones and polyether ketones, as well as copolymers and/or mixtures thereof.

10. Process for the inscription and marking of a flexible support unit in the form of a double sack according to one or more of Claims 1 to 9, consisting of an inner sack, i.e. inner laser-markable flexible support layer, and an outer sack, i.e. flexible outer laser-inactive support layer, **characterised in that** a laser-sensitive pigment and/or additive is incorporated into the inner sack or applied to the surface, and the laser inscription of the inner sack is carried out through the outer sack, where only the inner sack is marked.

11. Process for the inscription and marking of a laser-markable flexible support unit according to Claim 10, **characterised in that** a CO₂ or Nd:YAG laser is used.

12. Laser-markable flexible support unit in the form of a double sack according to one or more of Claims 1 to 9 inscribed and marked by the process of Claim 10.

## Revendications

1. Unité de support flexible marquable au laser faite en matière plastique sous la forme d'un sac double, **caractérisée en ce qu'**elle est constituée d'une couche de support flexible interne, c'est-à-dire un sac interne, et d'une ou plusieurs couches de support flexibles externes inactives au laser qui sont ou peuvent être séparées les unes des autres, c'est-à-dire un sac externe, où les sacs individuels ne sont pas reliés les uns aux autres sur une large zone et le sac interne comprend un ou plusieurs additifs ou pigments sensibles au laser.

2. Unité de support flexible marquable au laser selon la revendication 1, **caractérisée en ce que** la couche de support interne comprend, comme pigment ou additif sensible au laser, de l'anthracène, du pentaérythritol, des phosphates de cuivre, des phosphates d'hydroxyde de cuivre, du disulfure de molybdène, de l'oxyde d'antimoine(III), de l'oxychlorure de bismuth, des phyllosilicates, des flocons de verre, des flocons de SiO₂, des flocons d'oxyde métallique, des pigments conducteurs, des pigments holographiques, des pigments nacrés, de l'oxyde d'étain dopé à l'antimoine, des flocons de graphite revêtus ou des mélanges de ceux-ci.

3. Unité de support flexible marquable au laser selon la revendication 2, **caractérisée en ce que** le phyllosilicate est du mica naturel ou synthétique, du kaolin ou du talc.

4. Unité de support flexible marquable au laser selon la revendication 2, **caractérisée en ce que** le pigment nacré est à base de flocons de mica, de flocons de SiO₂, de flocons d'Al₂O₃, de flocons de Fe₂O₃ ou de flocons de verre.

5. Unité de support flexible marquable au laser selon la revendication 2, **caractérisée en ce que** le pigment nacré est un pigment de mica revêtu de TiO₂.

6. Unité de support flexible marquable au laser selon la revendication 3, **caractérisée en ce que** le pigment conducteur est un substrat sous forme de flocons revêtu de (Sn,Sb)O₂.

7. Unité de support flexible marquable au laser selon l'une des revendications 1 à 6, **caractérisée en ce que** la proportion de pigment et/ou additif sensible au laser dans la couche de support interne va de 0,05 à 10% en poids, sur la base de la couche de support ou sur la base de la couche de surface dopée au laser de la couche de support.

8. Unité de support flexible marquable au laser selon les revendications 1-7, **caractérisée en ce que** la matière plastique est un thermoplastique ou un plastique thermodurci.

9. Unité de support flexible marquable au laser selon la revendication 8, **caractérisée en ce que** le plastique est constitué de polyéthylène, polypropylène, polyamide, polyester, polyester-ester, polyéther-ester, polyphénylène éther, polyacétal, téréphtalate de polybutylène, méthacrylate de polyméthyle, acétal de polyvinyle, polystyrène, acrylonitrile-butadiène-styrène (ABS), acrylonitrile-styrène-acrylate (ASA), acétate de vinyle, polycarbonate, polyéther sulfones et polyéther cétones, ainsi que les copolymères et/ou mélanges de ceux-ci.

10. Procédé de gravure et de marquage d'une unité de support flexible sous la forme d'un sac double selon l'une ou plusieurs des revendications 1 à 9, constitué d'un sac interne, c'est-à-dire d'une couche de support flexible interne marquable au laser, et d'un sac externe, c'est-à-dire d'une couche de support flexible externe inactive au laser, **caractérisé en ce qu'**un pigment et/ou additive sensible au laser est incorporé dans le sac interne ou appliqué à la surface, et la gravure au laser du sac interne est effectuée à travers le sac externe, où seul le sac interne est marqué.

11. Procédé de gravure et de marquage d'une unité de support flexible marquable au laser selon la revendication 10, **caractérisé en ce qu'**on utilise un laser CO₂ ou Nd:YAG.

12. Unité de support flexible marquable au laser sous la forme d'un sac double selon l'une ou plusieurs des revendications 1 à 9 gravée et marquée par le procédé selon la revendication 10.
